# EUROPEAN PATENT APPLICATION

(11) **EP 4 707 738 A1**
(43) Date of publication of application: **11.03.2026**
(21) Application number: 23935629.8
(22) Date of filing: 01.05.2023
(51) Int. Cl.: G01C 21/26

(54) **DISPLAY POINT REGISTRATION METHOD AND DISPLAY SYSTEM FOR VEHICLE**

(71) Applicant: Nissan Motor Co. Ltd, Yokohama-shi, Kanagawa 220-8623 (JP)
(72) Inventor: YONEMICHI Takuto, Atsugi-shi, Kanagawa 243-0123 (JP); ZEMEK Radim, Atsugi-shi, Kanagawa 243-0123 (JP)
(74) Representative: Osha BWB
(86) International application number: PCT/JP2023/017064
(87) International publication number: WO 2024/228241

(57) **Abstract**

A server (40) stores, in a storage device (43), display history information including a position information history of a display location at which an in-vehicle device (20) displays a captured image using an in-vehicle camera (23) on the display unit (26). The server (40) outputs the display history information to a terminal device (50), and stores in the storage device (43), the position information of the display location selected by a user using a terminal device (50), as position information of a registration location at which the captured image is automatically displayed on the display unit (26).

## Description

### TECHNICAL FIELD

The present invention relates to a display location registration method and a vehicle display system.

### BACKGROUND ART

Patent Literature 1 discloses an in-vehicle display device that picks up locations requiring registration as activation locations for automatically activating a front camera mounted in a vehicle and presents the locations to a user. The in-vehicle display device disclosed in Patent Literature 1 displays locations, which satisfy predetermined conditions on a vehicle travel path, on a display means as candidate registration locations. The in-vehicle display device stores a location selected from the displayed candidate registration locations as a registration location, and displays an image captured by the front camera when a current location reaches the registration location.

### CITATION LIST

### PATENT LITERATURE

Patent Literature 1: Japanese Patent Application Publication No. 2012-173269

### SUMMARY OF INVENTION

### TECHNICAL PROBLEM

However, the in-vehicle display device described above is mounted in a vehicle, displays the candidate registration locations, and registers a registration location, at which an image captured by the front camera is displayed, with a vehicle engine turned on when the vehicle arrives at a destination. Therefore, a user cannot select a registration location by checking candidate registration locations when the vehicle engine is turned off, or after the user gets out of the vehicle.

The present invention has been made in view of the problems above, and an object of the present invention is to provide a display location registration method and a vehicle display system that can register a location, at which a image captured using an in-vehicle camera is automatically displayed, in a safer and more relaxed environment.

### TECHNICAL SOLUTION

A display location registration method according to one aspect of the present invention includes: storing, in a storage device, display history information including a position information history of a display location, at which a captured image using an in-vehicle camera mounted in a vehicle is displayed; displaying the display history information on a user terminal held by a user of the vehicle; and storing, in the storage device, position information of a display location selected by the user using the user terminal as position information of a registration location at which the captured image is automatically displayed.

A display location registration method according to one aspect of the present invention includes: storing, in a storage device, display history information including a position information history of a display location, at which a captured image using an in-vehicle camera mounted in a vehicle is displayed, and information indicating a display mode when the image is displayed at the display location; outputting the display history information to a terminal device operable by a user of the vehicle; storing, in the storage device, position information included in the display history information selected using the terminal device as position information of a registration location, at which the captured image is automatically displayed; and storing, in the storage device, the display mode included in the display history information selected using the terminal device, as a registered display mode which is a display mode when the captured image is automatically displayed.

### ADVANTAGEOUS EFFECTS

According to the present invention, it is possible for a user to register a location to automatically display an image captured by an in-vehicle camera in a safer and more relaxed environment.

### BRIEF DESCRIPTION OF DRAWINGS

[FIG. 1] FIG. 1 is a diagram schematically illustrating an overall configuration of a vehicle display system according to an embodiment.
[FIG. 2] FIG. 2 is a block diagram illustrating a configuration of a vehicle display system according to an embodiment.
[FIG. 3] FIG. 3 is a timing chart illustrating correspondence between user operations, vehicle operations, and server operations when display history information is stored in a vehicle display system according to an embodiment.
[FIG. 4] FIG. 4 is a timing chart illustrating correspondence between user operations, user terminal operations, and server operations when registration locations are stored in a vehicle display system according to an embodiment.
[FIG. 5] FIG. 5 is a diagram illustrating an example of a screen for displaying display history information and travel history information.
[FIG. 6] FIG. 6 is a diagram illustrating an example of a screen for displaying details of display history information.
[FIG. 7] FIG. 7 is a diagram illustrating an example of a screen for a user to select whether to store display history information, and to edit display history information.
[FIG. 8] FIG. 8 is a diagram illustrating an example of a screen for a user to select a display mode.
[FIG. 9] FIG. 9 is a diagram illustrating an example of a screen for a user to edit the position of a display location.

### DESCRIPTION OF EMBODIMENTS

Hereinafter, an embodiment of the present invention will be described with reference to the drawings. In the description of the drawings, the same parts are denoted by the same reference signs and description thereof is omitted.

### [Overview of Vehicle Display System]

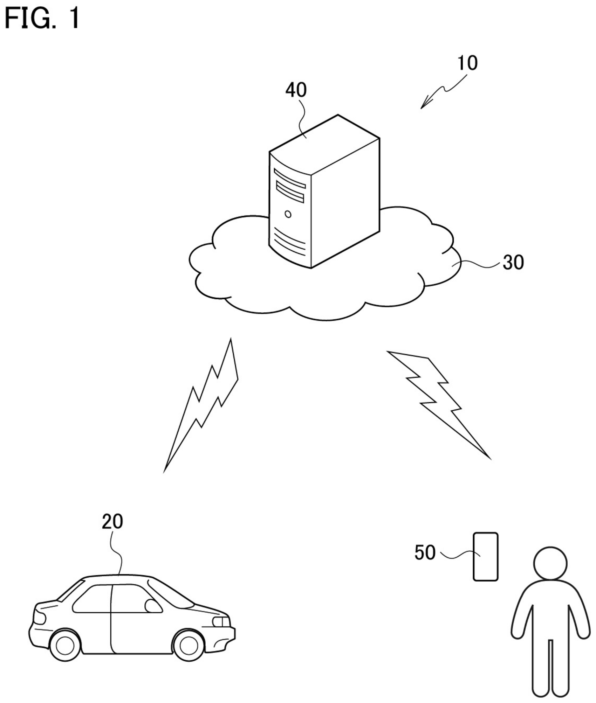

FIG. 1 schematically illustrates an overall configuration of a vehicle display system 10 according to an embodiment. The vehicle display system 10 is a system for presenting, to a user, a history of a display location at which a captured image using an in-vehicle camera is displayed, and for registering a location at which the captured image is automatically displayed. The vehicle display system 10 mainly includes an in-vehicle device 20 mounted in a vehicle, a server 40, and a user terminal (terminal device) 50. The in-vehicle device 20, the server 40, and the user terminal 50 are configured to communicate with each other via a network 30. The network 30 includes, for example, the Internet. The network 30 may use a mobile communication function such as 4G/LTE or 5G.

The in-vehicle device 20 is mounted in a vehicle. The in-vehicle device 20 transmits display history information including at least a position information history of a display location, at which the captured image using the in-vehicle camera is displayed on an HMI 26, to the server 40 in association with a user ID for identifying a user who rides in the vehicle. The server 40 stores display history information and registration information including at least position information of a registration location, at which the image captured using the in-vehicle camera is automatically displayed on the HMI 26, in association with the user ID.

Further, server 40 transmits the display history information and the registration information to the user terminal 50 corresponding to the user ID. The user terminal 50 displays the display history information received from the server 40 and updates the display history information based on an editing operation done by the user. The user terminal 50 transmits the updated display history information to the server 40 as registration information. The server 40 receives the registration information from the user terminal 50, and updates the registration information corresponding to the user ID.

Then, the server 40 transmits the registration information corresponding to the user ID to the in-vehicle device 20. The in-vehicle device 20 receives the registration information corresponding to the user ID from the server 40, and automatically displays the captured images using the in-vehicle camera on the HMI 26 when the vehicle is traveling at the registration location.

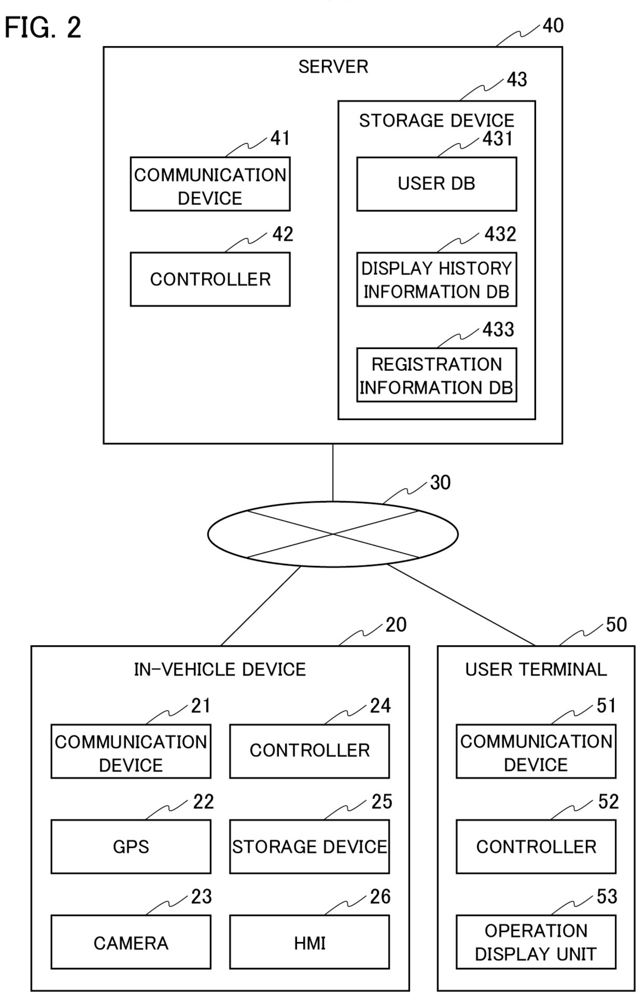

Next, a specific configuration of the vehicle display system 10 will be described with reference to FIG. 2.

### [Configuration of the In-Vehicle Device]

First, a configuration of the in-vehicle device 20 will be described. As illustrated in FIG. 2, the in-vehicle device 20 includes a communication device 21, a global positioning system (GPS) receiver 22, a camera 23, a controller 24, a storage device 25, and the human machine interface (HMI) 26.

The communication device 21 communicates with the server 40 via the network 30. The communication device 21 receives predetermined data from the server 40, and transmits predetermined data to the server 40. For example, the communication device 21 may be a device including a mobile communication function such as 4G/LTE or 5G, or may be a device including a Wi-Fi (registered trademark) communication function.

The GPS receiver 22 detects position information (including latitude and longitude information) on the vehicle on the ground by receiving radio waves from an artificial satellite. However, a method of detecting vehicle position information is not limited to that using the GPS receiver 22. For example, a method of detecting vehicle position information may be a method of estimating position information of a vehicle based on reception conditions of radio waves from a plurality of mobile phone base stations. For example, a position may be estimated using odometry. In this case, the in-vehicle device 20 includes a steering angle sensor, a wheel speed sensor, and a gyro sensor.

The camera 23 includes an imaging device such as a charge-coupled Device (CCD) or a complementary metal oxide semiconductor (CMOS), and images the surroundings of the vehicle. An installation location of the camera 23 is not particularly limited. However, in this embodiment, four cameras 23 are installed on front, rear, left, and right sides of the vehicle, and the cameras 23 image the front, rear, left, and right sides of the vehicle.

The cameras 23 output captured images to the controller 24. The images captured using the cameras 23 are stored in the storage device 25, and the controller 24 may acquire the images stored in the storage device 25. The cameras 23 capture images of the surroundings of the vehicle, and not the vehicle itself. Therefore, when the controller 24, which will be described below, displays a bird's-eye view image, the controller 24 uses a previously stored icon (image simulating the vehicle).

The storage device 25 may include non-transitory tangible storage media such as registers, cache memories, and memories such as read only memory (ROM) and random access memory (RAM) used as a main storage device. The storage device 25 stores at least display history information including a position information history of a vehicle position (hereinafter referred to as display location) when captured images using the camera 23 are displayed on the HMI 26. In other words, the display location is a vehicle position when the display of the HMI 26 is switched to an image captured by the camera 23.

The HMI 26 is an interface device for exchanging information between the in-vehicle device 20 and a user of a vehicle. The HMI 26 includes a display device visible to the user of the vehicle. Further, the HMI 26 includes an operation member and a voice input device for receiving user operation input to the in-vehicle device 20. The operation member may be a mechanical interface device such as a button, switch, lever, dial, keyboard, or the like, displayed on a touch panel. The HMI 26 receives an operation input of a user ID for identifying a user from the user of the vehicle.

The HMI 26 displays an image captured by the camera 23. Further, the HMI 26 accepts an operation input from the user for displaying the image captured by the camera 23. In this embodiment, the HMI 26 accepts an operation input by a user for setting a display mode. The display mode sets how to display the image captured by the camera 23 (at front, rear, left, and right sides of the vehicle) on the HMI 26. Examples of the display mode includes a mode for displaying a captured image including any of a front, rear, or side of the vehicle, and a mode for displaying a surrounding image of an area including the vehicle from above.

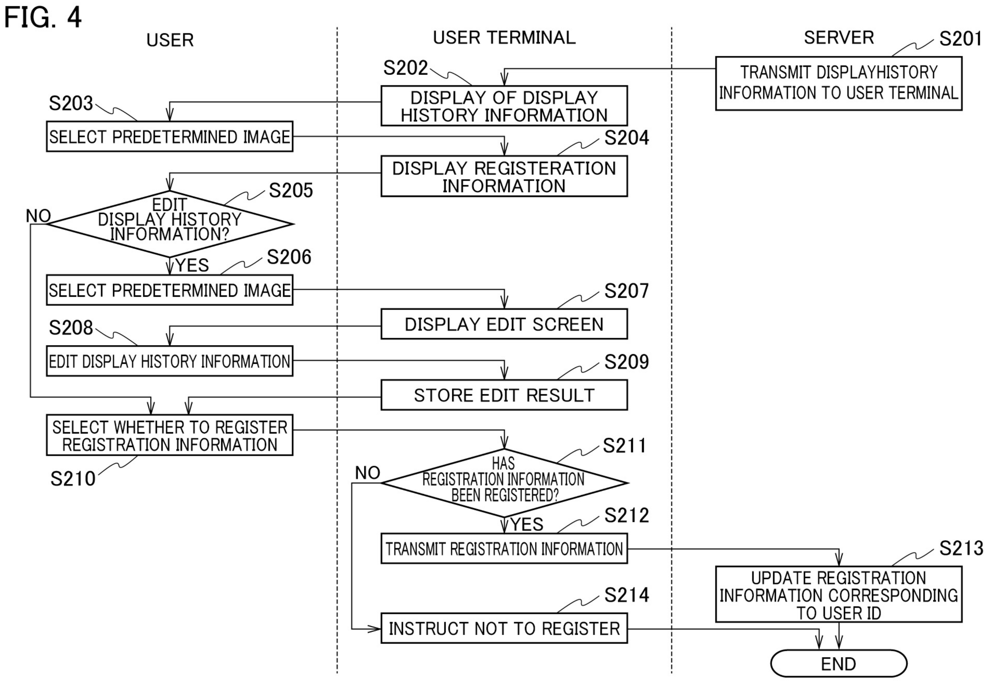

If parameters such as orientation of the camera 23 or zoom amount of the camera 23 are variable, the display mode may further include, for example, orientation, zoom amount, focus position, exposure correction (sensitivity, exposure time, and F value), and image processing parameters (gamma value and white balance) for the camera 23. Furthermore, if the HMI 26 is capable of posting the image captured by the camera 23 on a social networking service (SNS), the display mode may further include information on the type of SNS application that posted the captured image. A specific example of the display mode and details of the operation input for the display mode will be described below with reference to FIGS. 4 to 9.

The controller 24 is connected to the communication device 21, the GPS receiver 22, the camera 23, the storage device 25, and the HMI 26, and the controller 24 receives information input from the communication device 21, the GPS receiver 22, the camera 23, and the HMI 26. The controller 24 outputs information to the communication device 21, the GPS receiver 22, the camera 23, and the storage device 25.

The controller 24 is, for example, an electronic control unit (ECU) including a central processing unit (CPU), a memory, and an input/output unit for controlling the operation of the on-board device 20. A predetermined computer program is installed in the controller 24. The controller 24 performs various processes by executing the computer program.

In this embodiment, the controller 24 uses captured images using the four cameras 23 to generate a bird's eye image of a vehicle looking down from above (surrounding image). Since the method of generating a bird's eye image of the vehicle is a known technique, a detailed description thereof will be omitted. Further, the controller 24 stores travel history information of a vehicle in the storage device 25 by using position information of the vehicle and various sensors (not illustrated) mounted in the vehicle. The travel history information includes at least one of a travel route traveled by a vehicle or a vehicle orientation when a captured image is displayed on the HMI 26.

The controller 24 recognizes a user ID received by the HMI 26. Further, the controller 24 stores display history information including at least a position information history of a display location at which the captured image is displayed on the HMI 26 in the storage device 25, and transmits the display history information to the server 40 in association with the user ID. The display history information may further include information indicating a display mode when the captured images are displayed on the HMI 26. The display history information may further include at least one of date or time when the captured images are displayed on the HMI 26 or the captured images.

Further, when the controller 24 recognizes a user ID, the controller 24 receives registration information from the server 40, including position information on a registration location at which at least a captured image is automatically displayed on the HMI 26 corresponding to the user ID. In other words, a registration location is a location at which the display of the HMI 26 is automatically switched to the captured images using the cameras 23. The controller 24 automatically displays the captured images using the cameras 23 on the HMI 26 when the vehicle is traveling at the registration location. In other words, the controller 24 automatically switches the display of the HMI 26 to the captured images using the cameras 23 when the vehicle is traveling at the registration location.

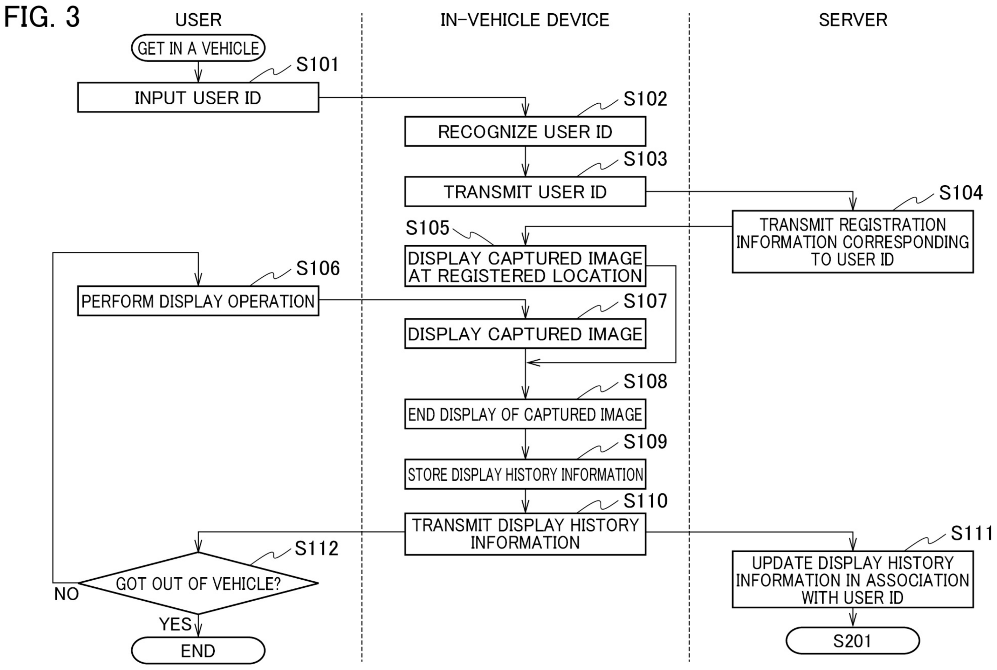

The registration information may further include information indicating a registration display mode, which is a display mode for automatically displaying a captured image on the HMI 26. In this case, the controller 24 automatically displays captured images using the cameras 23 on the HMI 26 in the registration display mode when the vehicle is traveling at the registration location. Details of the processes performed by the controller 24 will be described below with reference to FIG. 3. Various processes provided by the controller 24 may be implemented by software or by dedicated hardware.

### [Configuration of Server]

Next, a configuration of the server 40 will be described. As illustrated in FIG. 2, the server 40 includes a communication device 41, a controller 42, and a storage device 43.

The communication device 41 communicates with the in-vehicle device 20 and the user terminal 50 via the network 30. The communication device 41 receives predetermined data from the in-vehicle device 20 and the user terminal 50, and transmits predetermined data to the in-vehicle device 20 and the user terminal 50. For example, the communication device 41 may be a device with a mobile communication function such as 4G/LTE or 5G, or a device with a Wi-Fi communication function.

The storage device 43 is a storage medium such as a hard disk drive (HDD). The storage device 43 includes a user database 431, a display history information database 432, and a registration information database 433.

The user database 431 is a database in which various kinds of pieces of information related to the user of the vehicle are stored in association with a user ID for identifying the user.

The display history information database 432 is a database in which display history information received from the in-vehicle device 20 is stored in association with a user ID.

The registration information database 433 is a database in which registration information received from the user terminal 50 is stored in association with a user ID. The registration information includes at least position information of a registration location, at which an image captured by the camera 23 is automatically displayed on the HMI 26. The registration information may further include information indicating a registration display mode. The registration display mode is a display mode when the image captured by the camera 23 is automatically displayed on the HMI 26.

The controller 42 is connected to the communication device 41 and the storage device 43, and information from the communication device 41 is input to the controller 42. The controller 42 outputs information to the communication device 41 and the storage device 43. The controller 42 is a general purpose microcomputer having a CPU, a memory, and an input/output unit. A predetermined computer program is installed in the controller 42. The controller 42 executes various processes by executing the computer program.

The controller 42 stores the display history information received from the in-vehicle device 20 in the display history information database 432 of the storage device 43 in association with the user ID, and updates the display history information. When there is no registration information on the corresponding user ID when the display history information is received, the controller 42 automatically generates registration information from the display history information, and stores the generated registration information in the registration information database 433 of the storage device 43 in association with the user ID.

Further, the controller 42 transmits the display history information to the user terminal 50 corresponding to the user ID. The controller 42 updates the registration information corresponding to the user ID when receiving the registration information from the user terminal 50. The controller 42 transmits the registration information corresponding to the user ID to the in-vehicle device 20. Details of processes performed by the controller 42 will be described below with reference to FIGS. 3 and 4. Various processes provided by the controller 42 may be implemented by software or by dedicated hardware.

### [Configuration of User Terminal]

Next, a configuration of the user terminal 50 will be described. The user terminal 50 is, for example, a portable terminal such as a smartphone held by a user. As illustrated in FIG. 2, the user terminal 50 includes a communication device 51, a controller 52, and an operation display unit 53. Note that the user terminal 50 is not limited to a portable terminal held by a user, and may be, for example, a terminal installed at a parking space.

The communication device 51 communicates with the server 40 via the network 30. The communication device 51 receives predetermined data from the server 40, and transmits predetermined data to the server 40. For example, the communication device 51 may be a device with a mobile communication function such as 4G/LTE or 5G, or a device with a Wi-Fi communication function.

The operation display unit 53 displays information necessary for operation by a user, and accepts an input operation from the user. For example, the operation display unit 53 may include a touch panel that allows an input operation according to information displayed on the operation display unit 53. The operation display unit 53 may be configured so that an operation unit for accepting an input operation from the user, and a display unit for displaying information necessary for the operation of the user, are separate.

The controller 52 is connected to the communication device 51 and the operation display unit 53, and the controller 52 receives information from the communication device 51 and the operation display unit 53. The controller 52 outputs information to the communication device 51 and the operation display unit 53. The controller 52 is a general-purpose microcomputer having a CPU, a memory, and an input/output unit. A predetermined computer program is installed in the controller 52. By executing the computer program, the controller 52 executes various processes.

The controller 52 receives display history information from the server 40. The controller 52 displays the display history information received from the server 40 on the operation display unit 53. The controller 52 updates the display history information based on the editing operation from the user. The controller 52 transmits the updated display history information to the server 40 as registration information. Details of processes performed by the controller 52 will be described below with reference to FIG. 4. Various processes provided by the controller 52 may be implemented by software or by dedicated hardware.

### [Operation of Vehicle Display System]

Next, with reference to FIG. 3, correspondence between operation by a user, operation of the in-vehicle device 20, and operation of the server 40 when the display history information is stored in the vehicle display system 10 will be described.

First, in step S101, a user in a vehicle inputs a user ID to the HMI 26 of the in-vehicle device 20. The HMI 26 of the in-vehicle device 20 receives an operation input of the user ID by the user, for example, using a touch panel.

Proceeding to step S102, the controller 24 of the in-vehicle device 20 recognizes the user ID received by the HMI 26. In step S103, the controller 24 transmits the user ID to the server 40.

Proceeding to step S104, the controller 42 of the server 40 receives the user ID from the in-vehicle device 20. The controller 42 transmits a piece of registration information corresponding to the user ID to the in-vehicle device 20, from among pieces of registration information stored in the registration information database 433 of the storage device 43. The registration information includes at least position information of a registration location at which an image captured by the camera 23 is automatically displayed on the HMI 26.

Proceeding to step S105, the controller 24 of the in-vehicle device 20 automatically displays an image captured using the camera 23 on the HMI 26 when the vehicle is traveling at a registration location. Based on the position information of the vehicle, the controller 24 determines whether or not the vehicle is traveling at the registration location. For example, when the position information of the vehicle is included within a predetermined range from the position information of the registration location, the controller 24 determines that the vehicle is traveling at the registration location, and automatically displays the captured image on the HMI 26. When the registration information includes registration display mode information, the controller 24 displays the image captured by the camera 23 at the registration location on the HMI 26 in the registration display mode. Then, the process proceeds to step S108.

Further, when the user performs a display operation for displaying the captured image to the HMI 26 of the in-vehicle device 20 as illustrated in step S106, the process proceeds to step S107, and the controller 24 of the in-vehicle device 20 displays the captured image on the HMI 26. When the user performs an operation input to set a display mode to the HMI 26 of the in-vehicle device 20 in step S106, the controller 24 of the in-vehicle device 20 displays the captured image in the display mode set by the user.

Proceeding to S108, the controller 42 of the in-vehicle device 20 ends display of the captured image after a predetermined time elapses since the start of the display of the captured image, or after the vehicle travels a predetermined distance from the start of the display of the captured image. It should be noted that the controller 42 may terminate the display of the image captured by the camera 23 when receiving an operation by the user via the HMI 26 to terminate the display of the captured image.

Next, in step S109, the controller 24 of the in-vehicle device 20 stores in the storage device 25 display history information including a position information history of the display location, at which the image captured by the camera 23 is displayed on the HMI 26, and the image captured by the camera 23 at the display location. When the user performs an operation input to set a display mode to the HMI 26 of the in-vehicle device 20 in step S106, the controller 24 stores, in the storage device 25, display history information including further information on the display mode. In this embodiment, the controller 24 stores the display history information in the storage device 25 in association with the travel history information of the vehicle.

Proceeding to step S110, the controller 24 transmits the display history information and the travel history information of the vehicle to the server 40 in association with the user ID.

Proceeding to step S111, the controller 42 of the server 40 stores the display history information received from the in-vehicle device 20 in association with the user ID in the display history information database 432 of the storage device 43, and updates the display history information. In this embodiment, the controller 42 of the server 40 stores the display history information and the travel history information of the vehicle received from the in-vehicle device 20 in association with the user ID in the display history information database 432 of the storage device 43. When the controller 42 receives display history information and there is no registration information corresponding to the corresponding user ID, the controller 42 automatically generates registration information from the display history information, and stores the generated registration information in the storage device 43 in association with the user ID. Then, the operation proceeds to step S201 of FIG. 4.

Proceeding to step S112, when the user has turned off the engine of the vehicle and got out of the vehicle (YES in step S112), the operation in FIG. 3 ends. When the user has not turned off the engine of the vehicle and left the vehicle (NO in step S112), the operation returns to step S106.

Next, with reference to FIGS. 4 to 9, the correspondence between operation of by a user, operation of the user terminal 50, and operation of the server 40 when the registration location is registered in the vehicle display system 10 will be described.

First, in step S201, the controller 42 of the server 40 transmits the display history information to the user terminal 50 corresponding to the user ID. Further, the controller 42 of the server 40 transmits the travel history information to the user terminal 50 corresponding to the user ID. The timing at which the controller 42 of the server 40 transmits the display history information and the travel history information to the user terminal 50 is not particularly limited, and it is sufficient if the display history information and the travel history information can be confirmed using the user terminal 50 after the user has left the vehicle.

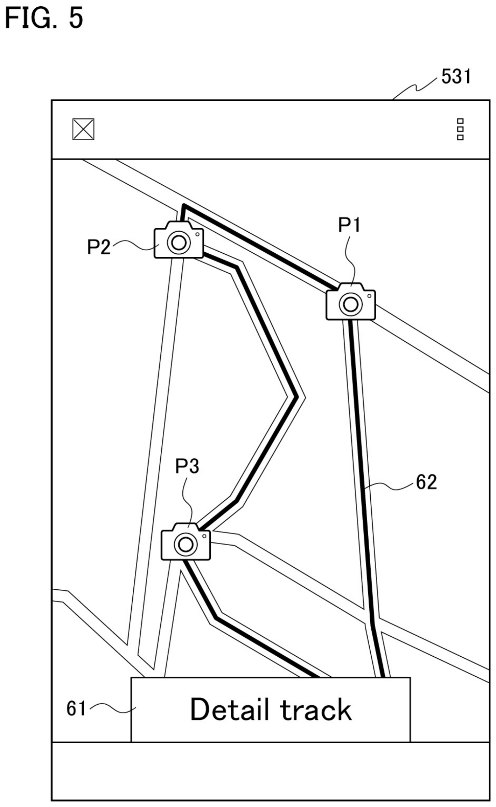

Proceeding to step S202, the controller 52 of the user terminal 50 displays the display history information received from the server 40 on the operation display unit 53 of the user terminal 50. In this embodiment, the controller 52 of the user terminal 50 displays the display history information and the travel history information received from the server 40 on the operation display unit 53 of the user terminal 50. For example, as illustrated in FIG. 5, the controller 52 of the user terminal 50 displays, on the operation display unit 53, a screen 531 including camera icons P1 to P3 indicating a display location at which the captured image is displayed, and a travel route 62 of the vehicle.

Proceeding to step S203, the user performs a predetermined operation input such as selecting a predetermined image through the operation display unit 53 of the user terminal 50. When the operation display unit 53 of the user terminal 50 accepts a predetermined operation from the user, the operation proceeds to step S204. Moreover, for example, when the user selects a notification displayed on the operation display unit 53, the operation proceeds to step S204. The predetermined operation is not particularly limited. In the example illustrated in FIG. 5, when the user selects any of camera icons P1 to P3 on the screen 531, the operation proceeds to step S204.

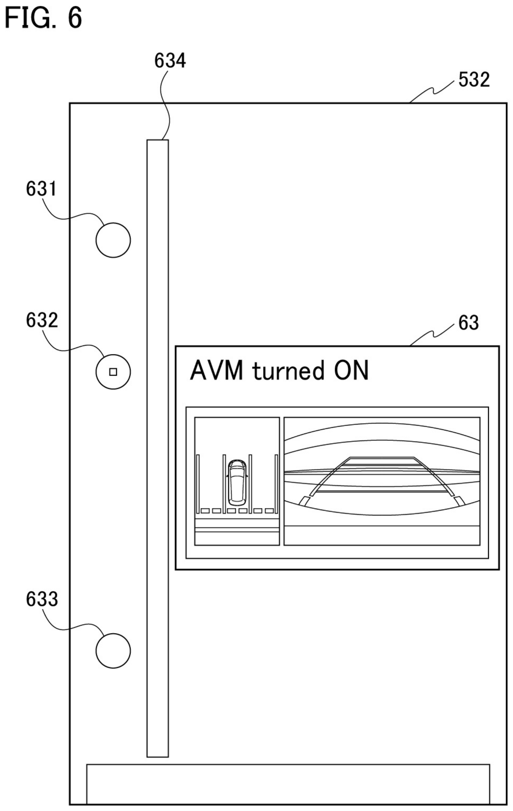

In FIG. 5, for example, when the user selects an icon 61, the controller 52 of the user terminal 50 may display a screen 532 illustrating details of the display history information and travel history information as illustrated in FIG. 6 on the operation display unit 53. The screen 532 displays, for example, the position information of the display location, the travel route of the vehicle, and a list of images 63 captured at the display location using the camera 23 and displayed on the HMI 26. In the example illustrated in FIG. 6, display locations are indicated by circular marks 631 to 633. The marks 631 to 633 correspond to the display locations indicated by camera icons P1 to P3 in FIG. 5. In the example illustrated in FIG. 6, the travel route of the vehicle is indicated by a vertical line 634. The line 634 corresponds to the travel route 62 in FIG. 5. In FIG. 6, for example, when the user touches the mark 632, the image 63 captured using the camera 23 at the display location indicated by the mark 632 is displayed on the screen 532. Then, when the user selects the captured image 63, the operation proceeds to step S204.

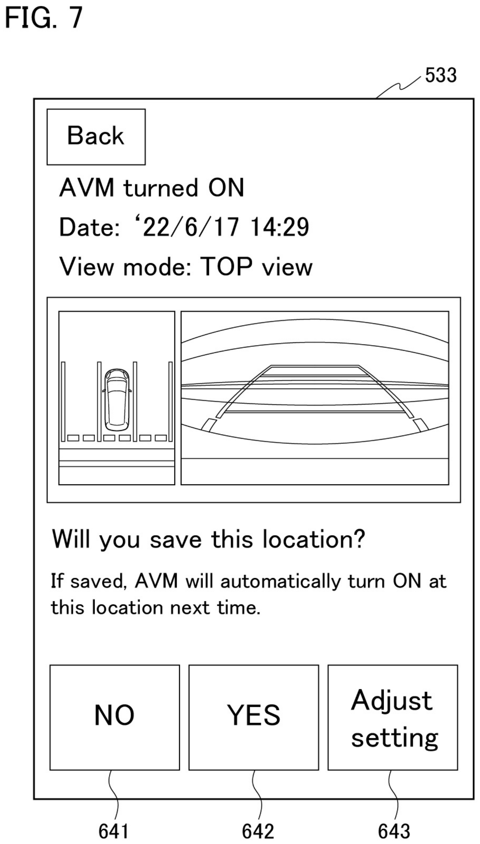

In step S204, the controller 52 of the user terminal 50 displays a selection screen 533 on the operation display unit 53 of the user terminal 50. The selection screen 533 is a screen in which it is possible to select whether or not to store the position information and display mode of the display location included in the display history information, selected by the user in step S203, in the storage device 43 of the server 40 as the registration location and the registration display mode. That is, the selection screen 533 is a screen on which it is possible to select whether or not to store the display history information selected by the user in step S203, in the storage device 43 of the server 40 as registration information. As illustrated in FIG. 7, the selection screen 533 includes a first image 641 and a second image 642 indicating whether or not to store the position information and display mode of the display location, included in the display history information selected by the user in step S203, in the storage device 43 of the server 40 as the registration location and the registration display mode. When the position information and the registration display mode of the registration location are stored in the storage device 43, the image captured by the in-vehicle camera 23 is automatically displayed on the HMI 26 in the registration display mode if the vehicle travels at the registration location next time.

Furthermore, the selection screen 533 is a screen in which it is possible to select whether or not to edit the position information and the display mode of the display location, included in the display history information selected by the user in step S203. As illustrated in FIG. 7, the selection screen 533 includes a third image 643 indicating whether or not to edit the position information and the display mode of the display location included in the display history information selected by the user in step S203.

If the user edits the position information and the display mode of the display location in step S205 (YES in step S205), the process proceeds to step S206. In step S206, the user selects the third image 643 on the selection screen 533. If the user does not edit the position information of the display location and the display mode (NO in step S205), the process proceeds to step S210.

In step S207, the controller 52 of the user terminal 50 displays a display mode edit screen 534 for editing the display mode, and a display location edit screen 535 for editing the position information of the display location, on the operation display unit 53 of the user terminal 50. In step S208, the user performs an edit operation of the position information of the location and the display mode.

### [Display Mode Edit Operation]

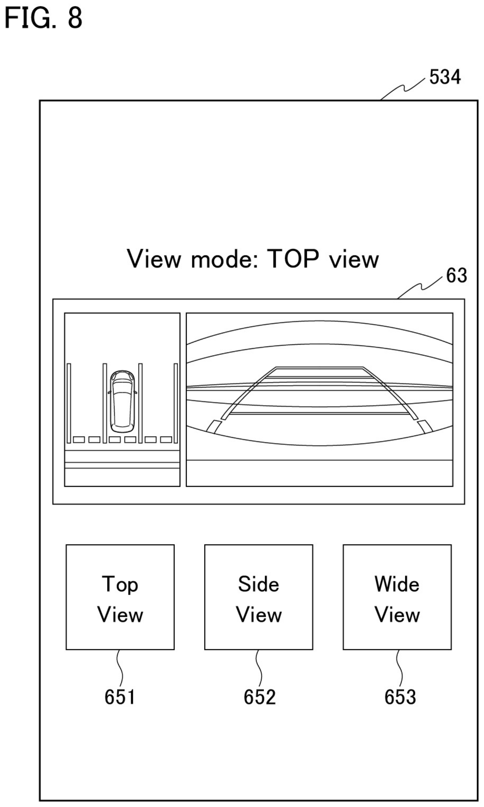

An example of a display mode edit operation will be described with reference to FIG. 8. The display mode edit screen 534 includes a plurality of fourth images 651 to 653 indicating display mode options, as illustrated in FIG. 8.

In the example illustrated in FIG. 8, the image 651 illustrates a first display mode (view mode: Top View) that displays a bird's-eye view of a vehicle viewed from above, which is generated from images captured using the four cameras 23, and a rear image of the vehicle captured by the camera 23 installed behind the vehicle. The image 652 shows a second display mode (View mode: Side View) that displays a front image of the vehicle captured by the camera 23 installed at the front of the vehicle, and a right (or right) image of the vehicle captured by the camera 23 installed on the right side of the vehicle. The image 652 shows a third display mode (View mode: Wide View) that displays an image in a range close to 180 degrees in front of the vehicle, captured by the camera 23 installed at the front of the vehicle.

As illustrated in FIG. 8, the display mode edit screen 534 may include the captured image 63 that is displayed on the HMI 26 in a display mode corresponding to a selected fourth image when one of the fourth images 651 to 653 is selected. It should be noted that the captured image 63 may be an image captured at a display location using the camera 23 in the past, or a sample image of the display mode corresponding to the selected fourth image.

Furthermore, the display mode edit screen 534 may include description of which position relative to the vehicle is included in the captured image that is displayed on the HMI 26, in a display mode corresponding to the selected fourth image, when any of the plurality of fourth images 651 to 653 is selected and which vehicle operation is suitable. For example, in the example illustrated in FIG. 8, the captured image displayed in the first display mode corresponding to the image 651 includes a bird's-eye view of the vehicle viewed from above and the rear of the vehicle, and is suitable when the vehicle is parked. The captured image displayed in the second display mode corresponding to the image 652 includes the front of the vehicle and the right side (or left side) of the vehicle, and is suitable when it is desired to confirm the distance between the front of the vehicle and the side of the vehicle such as parallel parking or to pull over. The captured image displayed in the third display mode corresponding to the image 653 includes a range of nearly 180 degrees in front of the vehicle, and is suitable for checking the right and left safety at an intersection with poor visibility.

### [Display location Editing Operation]

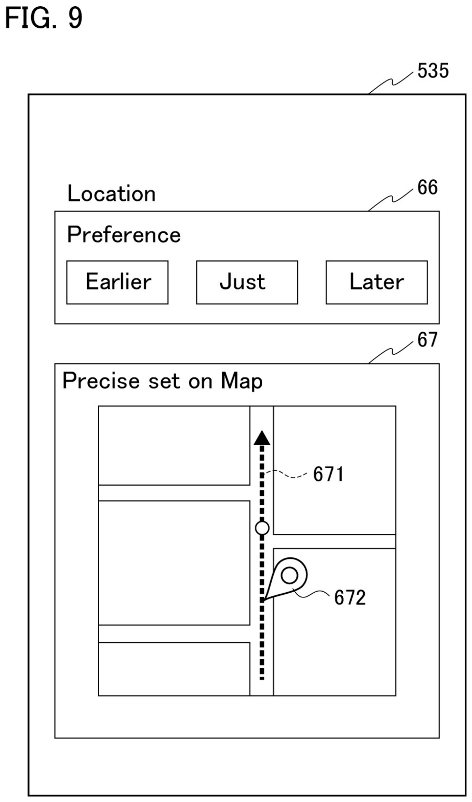

Next, an example of a display location editing operation will be described with reference to FIG. 9. As illustrated in FIG. 9, the display location editing screen 535 includes a fifth image 66 for moving the position of the display location by a predetermined distance. For example, the fifth image 66 includes three images, "Earlier", "Just", and "Later", as illustrated in FIG. 9. When the user selects "Earlier" in the fifth image 66, the position of the display location is moved by a predetermined distance in a direction opposite to the traveling direction of the vehicle on the traveling path of the vehicle. When the user selects "Later" in the fifth image 66, the position of the display location is moved by a predetermined distance in the traveling direction of the vehicle on the traveling path of the vehicle. The predetermined distance is, for example, 10 m, and is not particularly limited. When the user selects "Just" in the fifth image 66, the position of the display location included in the display history information is maintained. The display mode editing screen 534 may display the position of the edited display location on the map based on a user's operation.

Further, as illustrated in FIG. 9, the display location editing screen 535 may include a map 67 around the display location, and the operation display unit 53 may accept an operation to move the position of the display location on the map 67. For example, the map 67 may include a vehicle traveling route 671 and a marker 672 indicating a display location, and the user may select and drag the marker 672 to move the position of the display location. The camera 23 may capture a moving image for a predetermined time before and after the display location, and the captured moving image is stored in the storage device 43 as display history information. In this case, the image captured by the camera 23 at the location after the movement can be cut out from the moving image and displayed on the display location editing screen 535 when the user accepts an operation to move the position of the display location on the display location editing screen 535.

In step S209 of FIG. 4, the controller 52 of the user terminal 50 stores the edited display history information. Further, the controller 52 of the user terminal 50 displays the selection screen 533 again on the operation display unit 53 of the user terminal 50. In step S210, the user selects whether to register registration information.

In step S211, the process proceeds to step S212 when the user selects to register the registration information (YES in step S211). However, when the user selects not to register the registration information (NO in step S211), the process proceeds to step S214.

In step S212, the controller 52 of the user terminal 50 transmits the display history information as registration information to the server 40 in association with the user ID. When the controller 52 of the user terminal 50 receives the editing operation of the display history information from the user via the operation display unit 53, it transmits the edited display history information as registration information to the server 40. If the controller 52 of the user terminal 50 does not receive the editing operation of the display history information from the user via the operation display unit 53, it transmits the original display history information as registration information to the server 40.

In step S213, the controller 42 of the server 40 updates the registration information in the following manner: the controller 42 of the server 40 updates the registration information corresponding to the user ID, based on the registration information received from the user terminal 50, and stores the registration information in the registration information database 433 of the storage device 43. Then, the operation of FIG. 4 ends.

In step S214, the controller 52 of the user terminal 50 instructs the server 40 not to register the display history information, and the operation of FIG. 4 ends.

### [Operation and Effect]

As described above, a display location registration method according to one embodiment provides a display location registration method for a vehicle display system 10 including the in-vehicle device 20 mounted in a vehicle, the vehicle display system including the display unit (HMI) 26 and the in-vehicle camera 23; the server 40; and the terminal device (user terminal) 50 held by a user of the vehicle. The server 40 stores display history information including a position information history of display a location, at which the in-vehicle device 20 displays a captured image using the in-vehicle camera 23 on the display unit 26, in the storage device 43. The server 40 outputs the display history information to the terminal device 50, and stores the position information of a display location selected by the user using the terminal device 50 in the storage device 43 as position information of a registration location, at which the captured image is automatically displayed on the display unit 26.

The position of the display location at which the captured image is displayed can be displayed on the terminal device 50. The user can register a registration location at which the captured image is automatically displayed on the display unit by confirming the position of the display location using the terminal device 50 when the engine of the vehicle is off, or after the user gets out of the vehicle. The user can register the registration location in a safe and relaxed environment.

In the display location registration method according to one embodiment, the display history information further includes information indicating the display mode when the captured image is displayed on the display unit 26. The server 40 stores the display mode selected by the user using the terminal device 50 in the storage device 43 as the registered display mode which is the display mode when the captured image is automatically displayed on the display unit 26.

Thus, the display mode when the captured image is displayed can be displayed on the terminal device 50. The user can select the registered display mode when the captured image is automatically displayed on the display unit 26 by confirming the display mode at the display location using the terminal device 50 when the vehicle engine is off, or after the user has gotten out of the vehicle. The user can register the display mode when the captured image is automatically displayed on the display unit 26 in a safe and calm environment.

The display location registration method according to one embodiment provides a display location registration method of the vehicle display system 10 mounted in the vehicle, and including the in-vehicle device 20 including the display unit (HMI) 26 and the in-vehicle camera 23; the server 40; and the terminal device (user terminal) 50 operable by the user of the vehicle. The server 40 stores display history information including a position information history of a display location, at which the in-vehicle device 20 displays an image captured using the in-vehicle camera 23 on the display unit 26, and information indicating the display mode when the captured image is displayed on the display unit 26 in a storage device 43. The server 40 outputs the display history information to the terminal device 50, and stores the position information included in the display history information selected by the terminal device 50 in the storage device 43 as the position information of the registration location at which the captured image is automatically displayed on the display unit 26. The server 40 also stores the display mode included in the display history information selected by the terminal device 50 in the storage device 43 as the registration display mode which is the display mode when the captured image is automatically displayed on the display unit 26.

Thus, the registration location and the registration display mode can be set using the terminal device 50 when the vehicle engine is off, or after the user has gotten out of the vehicle, and the registration location can be registered in a safer and more relaxed environment.

In the display location registration method according to one embodiment, the server 40 stores the display history information in the storage device 43 in association with the travel history information of the vehicle. The terminal device 50 displays the display history information and the travel history information, and when receiving a predetermined operation from the user, displays the first image 641 and the second image 642 indicating whether or not to store the position information and the display mode of the display location, which are included in the display history information, in the storage device 43 as the position information and the registration display mode of the registration location.

The display history information and the travel history information can be displayed on the terminal device 50. The user can confirm the display location and the display mode included in the display history information and the travel history information by using the terminal device 50, and can select whether or not to store the display location and the display mode included in the display history information as the registration location and the registration display mode. The user can register a registration location and a registration display mode based on display history information and travel history information in a safe and relaxed environment.

In the display location registration method according to one embodiment, the terminal device 50 displays the display history information and travel history information, and when receiving a predetermined operation from the user, displays the third image 643 indicating that the position information of the display location and the display mode included in the display history information are edited.

The user can edit the display location and the display mode included in the display history information by using the terminal device 50, and select whether or not to store the display location and the display mode as a registration location and a registration camera mode.

In the display location registration method according to one embodiment, the display history information includes the captured image 63 using the in-vehicle camera 23 at a display location. The terminal device 50 displays the plurality of fourth images 651 to 653 indicating display mode options when the third image 643 is selected, and displays the captured image 63 displayed in the display mode corresponding to the selected fourth image when any of the plurality of fourth images 651 to 653 is selected.

The user can select the registration display mode by checking the captured image 63 using the in-vehicle camera 23 for each display mode by using the terminal device 50.

In the display location registration method according to one embodiment, when any one of the plurality of fourth images 651 to 653 is selected, the terminal device 50 displays description of which position relative to the vehicle is included in the captured image 63 displayed in the display mode corresponding to the selected fourth image and which vehicle operation is suitable.

The user can select the registered display mode by confirming the position relative to the vehicle included in the captured image 63 using the in-vehicle camera 23 for each display mode, and which vehicle operation is suitable in the captured image 63 by using the terminal device 50.

In the display location registration method according to one embodiment, when the third image 643 is selected, the terminal device 50 displays the fifth image 66 for moving the position of the display location by a predetermined distance. The user can adjust the position of the display location by using the terminal device 50, and register the adjusted position as a registration location.

In the display location registration method according to one embodiment, when the third image 643 is selected, the terminal device 50 displays the map 67 around the display location and accepts an operation to move the position of the display location on the map 67. The user can adjust the position of the display location on the map 67 by using the terminal device 50 and register the adjusted position as a registration location.

In the display location registration method according to one embodiment, the travel history information includes at least one of a traveling route traveled by the vehicle, or an orientation of the vehicle when the captured image is displayed on the display unit 26. The user can confirm a past traveling route or orientation of the vehicle, and past display history information to register the registration location and the registration display mode.

In the display location registration method according to one embodiment, the server 40 transmits information indicating the position information of the registration location and the registration display mode to the in-vehicle device 20. The in-vehicle device 20 can control the in-vehicle camera 23 based on the registration location and the registration display mode.

In the display location registration method according to one embodiment, the display history information is stored in association with a user ID for identifying the user, and when the in-vehicle device 20 recognizes the user ID, the display history information is transmitted to the in-vehicle device 20. Thus, the in-vehicle device 20 can control the in-vehicle camera 23 based on the registration location and the registration display mode stored in association with the user ID, even when the user gets in a vehicle different from the vehicle he/she got in the last time.

In the display location registration method according to one embodiment, the display history information further includes the date and time when the captured image was displayed on the display unit 26. The user can register the registration location and the registration display mode by confirming the date and time when the captured image was displayed in the past.

In the display location registration method according to one embodiment, the display mode includes a mode for displaying either a captured image including a front, rear, or side of the vehicle, or a surrounding image of an area including the vehicle from above. The user can register the registration display mode suitable for the registration location from among a plurality of display modes.

The embodiments of the present invention have been described above. However, it should be understood that the descriptions and the drawings which form a part of this disclosure are not intended to limit the invention. Various alternative embodiments, examples, and operation techniques will become apparent to those skilled in the art from this disclosure.

For example, the display history information may further include information indicating the display mode of the captured image displayed at the display location, and information on the elapsed time during which the captured image has been displayed on the display unit 26 for each display mode. In this case, the server 40 may store the display mode, which has been displayed for the longest time in the display history information, in the storage device 43 as the registered display mode. In the registered display mode, the captured image is automatically displayed on the display unit 26. Thus, the registered display mode can be automatically registered.

In the embodiment above, the position information and the display mode included in the display history information selected by the user using the terminal device 50 are stored in the storage device 43 of the server 40 as the position information of the registration location and the registered display mode. However, the display history information need not necessarily be selected by a user, but may be selected by a computer. That is, the position information and the display mode included in the display history information selected by a computer may be stored in the storage device 43 of the server 40 as the position information of the registration location and the registered display mode. For example, the controller 42 of the server 40, or the controller 52 of the user terminal 50 may automatically select the registration location and the registered display mode from the position information of the display location and the display mode included in the display history information by using the display history information, geographical information, road information, or the like, of other vehicles in the past.

### [REFERENCE SIGNS LIST]

- 20: In-vehicle device
- 23: Camera (in-vehicle camera)
- 26: Display unit (HMI)
- 40: Server
- 43: Storage device
- 50: Terminal device (user terminal)

## Claims

1. A display location registration method for a vehicle display system comprising an in-vehicle device mounted in a vehicle, the vehicle display system including a display unit and an in-vehicle camera; a server; and a terminal device held by a user of the vehicle, the method comprising the following steps using the server:
storing, in a storage device, display history information including a position information history of a display location, at which the in-vehicle device displays a captured image using the in-vehicle camera on the display unit;
outputting the display history information to the terminal device; and
storing, in the storage device, position information of a display location selected by the user using the terminal device as position information of a registration location, at which the captured image is automatically displayed on the display unit.

2. The display location registration method according to claim 1, wherein
the display history information further includes information indicating a display mode when the captured image is displayed on the display unit; and
the server stores, in the storage device, the display mode selected by the user using the terminal device, as a registered display mode which is the display mode when the captured image is automatically displayed on the display unit.

3. A display location registration method for a vehicle display system comprising an in-vehicle device mounted in a vehicle, the vehicle display system including a display unit and an in-vehicle camera; a server; and a terminal device operable by a user of the vehicle, the method comprising the following steps using the server:
storing, in a storage device, display history information including a position information history of a display location at which the in-vehicle device displays a captured image using the in-vehicle camera on the display unit, and information indicating a display mode when the captured image is displayed on the display unit;
outputting the display history information to the terminal device;
storing, in the storage device, the position information included in the display history information selected using the terminal device, as position information of a registration location at which the captured image is automatically displayed on the display unit; and
storing, in the storage device, the display mode included in the display history information selected using the terminal device, as a registration display mode which is the display mode when the captured image is automatically displayed on the display unit.

4. The display location registration method according to claim 2 or 3, wherein the display mode includes a mode for displaying either a captured image including any of a front, rear, or side of the vehicle, or a surrounding image when an area including the vehicle is viewed from above.

5. The display location registration method according to any one of claims 2 to 4, wherein
the server stores the display history information in association with travel history information of the vehicle, and
the terminal device
displays the display history information and the travel history information, and
when receiving a predetermined operation from the user, displays a first image and a second image indicating whether or not to store in the storage device, the position information of the display location and the display mode included in the display history information, as the position information of the registration location and the registration display mode.

6. The display location registration method according to claim 5, wherein the terminal device displays the display history information and the travel history information, and when receiving a predetermined operation from the user, displays a third image indicating that the position information of the display location and the display mode included in the display history information are edited.

7. The display location registration method according to claim 6, wherein
the display history information includes the captured image at the display location by the in-vehicle camera, and
the terminal device displays a plurality of fourth images to indicate display mode options when the third image is selected, and displays the captured image displayed in the display mode corresponding to the selected fourth image when any of the plurality of fourth images is selected.

8. The display location registration method according to claim 7, wherein when any one of the plurality of fourth images is selected, the terminal device displays description of which position relative to the vehicle is included in the captured image displayed in the display mode corresponding to the selected fourth image, and which vehicle operation is suitable.

9. The display location registration method according to claim 6, wherein when the third image is selected, the terminal device displays a fifth image for moving the position of the display location by a predetermined distance.

10. The display location registration method according to claim 9, wherein when the third image is selected, the terminal device displays a map around the display location, and accepts an operation to move the position of the display location on the map.

11. The display location registration method according to claim 5, wherein the travel history information includes at least one of a traveling route traveled by the vehicle, or an orientation of the vehicle when the captured image is displayed on the display unit.

12. The display location registration method according to any one of claims 2 to 11, wherein the server transmits information indicating the position information of the registration location and the registration display mode to the in-vehicle device.

13. The display location registration method according to any one of claims 1 to 12, wherein the server stores the display history information in association with a user ID for identifying the user, and when the in-vehicle device recognizes the user ID, transmits the display history information to the in-vehicle device.

14. The display location registration method according to any one of claims 1 to 13, wherein the display history information further includes date and time when the captured image is displayed on the display unit.

15. The display location registration method according to claim 1, wherein
the display history information further includes information indicating a display mode of the captured image displayed at the display location, and information on an elapsed time during which the captured image has been displayed on the display unit for each display mode, and
the server stores the display mode, which has been displayed for the longest time in the display history information, in the storage device as a registered display mode, which is a display mode when the captured image is automatically displayed on the display unit.

16. A vehicle display system, comprising
an in-vehicle device mounted in a vehicle including a display unit and an in-vehicle camera;
a server; and
a terminal device held by a user of the vehicle, wherein
the server:
stores display history information in a storage device, including a position information history of a display location, at which the in-vehicle device displays a captured image using the in-vehicle camera on the display unit,
outputs the display history information to the terminal device, and
stores position information of a display location selected by the user using the terminal device in the storage device as position information of a registration location, at which the captured image is automatically displayed on the display unit.

17. A vehicle display system comprising:
an in-vehicle device mounted in a vehicle and including a display unit and an in-vehicle camera;
a server; and
a terminal device operable by a user of the vehicle, wherein
the server stores, in a storage device, display history information including a position information history of a display location at which the in-vehicle device displays a captured image using the in-vehicle camera on the display unit, and information indicating a display mode when the captured image is displayed on the display unit,
outputs the display history information to the terminal device,
stores, in the storage device, the position information included in the display history information selected using the terminal device, as position information of a registration location at which the captured image is automatically displayed on the display unit, and
stores, in the storage device, the display mode included in the display history information selected using the terminal device, as a registration display mode which is the display mode when the captured image is automatically displayed on the display unit.
